# FASCICULE DE BREVET EUROPEEN

(11) **EP 0 913 410 B1**
(45) Date de publication et mention de la délivrance du brevet: **14.07.2004**
(21) Numéro de dépôt: 98402682.3
(22) Date de dépôt: 28.10.1998
(51) Int. Cl.: C08G 12/12

(54) **Procédé de fabrication des résines thermodurcissables urée-formol et utilisation de ces résines en tant que résines d'imprégnation**
Verfahren zur Herstellung wärmehärtbarer Harnstoff-Formaldehydharze und ihre Verwendung als Tränkharze
Process for the preparation of thermosetting urea formaldehyde resins and their use as impregnating resins

(30) Priorité: 30.10.1997 FR 9713645
(43) Date de publication de la demande: 06.05.1999
(73) Titulaire: Atofina, 92800 Puteaux (FR)
(72) Inventeur: Lalo, Jack, 31400 Toulouse (FR); Garrigue, Roger, 31000 Toulouse (FR)
(74) Mandataire: Rieux, Michel

(56) Documents cités:
- EP-A- 0 323 311

## Description

La présente invention porte sur un procédé de préparation de résines thermodurcissables, ainsi que sur l'utilisation de ces résines en tant que résines d'imprégnation.

Les résines ci-dessus se présentent sous la forme de solutions aqueuses, ces solutions servant à l'imprégnation de matériaux supports absorbants, tels que le papier qui entre dans la fabrication des stratifiés.

Pour la mise en oeuvre de ces résines d'imprégnation, on prépare des mélanges d'imprégnation comprenant un condensat (ou précondensat) de résine, un agent de durcissement latent, tel qu'un sel d'amine, et, le cas échéant, des adjuvants usuels, tels qu'agents démoulants, agents mouillants, solvants, plastifiants et opacifiants. Les agents de durcissement utilisés sont tels qu'après avoir été ajoutés aux résines, ils laissent des temps de mise en oeuvre suffisants à la température ambiante, et, en même temps, permettent d'atteindre des durcissements extrêmement courts aux températures de mise en oeuvre, c'est-à-dire à des températures de l'ordre de 100 à 200°C.

Les résines d'imprégnation doivent, en elles-mêmes, présenter une bonne stabilité, une bonne réactivité et une compatibilité avec les adjuvants classiques mentionnés ci-dessus.

Le but essentiel visé est celui d'obtenir des résines stables - c'est-à-dire qui restent limpides -, tout en conservant leurs propriétés d'imprégnation et leur réactivité. Les caractéristiques visées pour de telles résines sont notamment les suivantes :
- Viscosité à 20°C (mPa.s) = 10-150
- Extrait sec (%) = 45-65
- Temps de gel à 80°C (sec.) < 200
- Stabilité minimale à 20°C (jours) > 15
- Stabilité minimale à 30°C (jours) ≥ 7.
- Imprégnabilité (sec.) ≤ 20 (d'après le test tel que défini ci-après).

La Société déposante a maintenant découvert un procédé qui permet d'atteindre les objectifs visés. Les conditions de ce procédé n'étaient pas évidentes, ainsi que l'attestent les nombreuses comparaisons effectuées dans les Exemples ci-après.

La présente invention a donc d'abord pour objet un procédé de fabrication de résines thermodurcissables urée-formol, caractérisé par le fait qu'il comprend les étapes consistant à :
(a) faire réagir de l'urée et du formol à un rapport molaire formol sur groupements NH₂ compris entre 1,5 et 2,5,
   (a1) à une température comprise entre 90 et 100°C pendant une durée comprise entre 5 et 20 minutes et à un pH compris entre 5,9 et 7; puis
   (a2) à une température comprise entre 80 et 100°C, pendant une durée comprise entre 30 et 60 minutes, et à un pH compris entre 1,5 et 7 ; puis
(b) ajouter de l'urée pour abaisser le rapport molaire formol sur groupements NH₂ à une valeur comprise entre 1,15 et 1,35,
   (b1) ladite phase d'addition, réalisée à une température comprise entre 90 et 100°C, pendant une durée comprise entre 5 et 20 minutes, et à un pH compris entre 5,9 et 7, étant suivie par
   (b2) une réaction de condensation, réalisée à une température comprise entre 80 et 100°C et à un pH compris entre 3,5 et 5, jusqu'à ce qu'un test d'arrêt soit atteint dont la valeur dépend de la concentration en matières actives du milieu et de la viscosité de la résine terminée, ladite viscosité devant être compatible avec une bonne imprégnabilité; et
(c) après refroidissement du milieu réactionnel, ajouter du formol afin de remonter le rapport molaire formol sur groupements NH₂ à une valeur comprise entre 1,4 et 1,9, à une température comprise entre 50 et 70°C, pendant une durée comprise entre 30 et 90 minutes; puis
(d) ajouter de l'urée afin d'obtenir un rapport molaire final formol sur groupements NH₂ correspondant à celui de la résine finie qui est compris entre 0,45 et 0,85, à une température comprise entre 20 et 60°C, pendant un laps de temps pouvant aller jusqu'à 90 minutes,
les étapes (a) et (b1) pouvant être remplacées par une étape (b1') consistant à faire réagir de l'urée et du formol au rapport molaire formol sur groupements NH₂ de l'étape (b1) et dans les conditions de température, de temps et de pH de l'étape (b1).

On conduit avantageusement la phase (a1) de l'étape (a) pendant environ 10 minutes, à une température de 90°C et à pH 7.

On conduit avantageusement la phase (a2) de l'étape (a) à une température de 100°C et pendant 30 minutes.

Par ailleurs, lors de la phase (a2), on préfère ajuster la valeur du pH par un agent d'ajustement du pH dont la nature et la quantité sont choisies pour que son addition à la résine ne perturbe ni la réactivité, ni la stabilité de celle-ci. L'agent d'ajustement du pH lors de cette phase (a2) - choisi selon la valeur du pH visée - peut, entre autres, être un acide, comme l'acide formique, ou un sel d'amine et d'acide fort, comme le sulfate d'ammonium et le sulfamate d'ammonium. Un sel d'amine et d'acide fort sera avantageusement utilisé pour les faibles valeurs de pH.

On conduit avantageusement la phase (b1) de l'étape (b) pendant environ 10 minutes.

On conduit avantageusement la phase (b2) de l'étape (b) à une température de l'ordre de 98°C et on arrête la condensation de l'étape (b2) de telle sorte que la viscosité à 20°C de la résine soit de 10-150 mPa.s.

A l'étape (d), on ajoute généralement l'urée à une température de l'ordre de 20 à 60°C. Lorsque l'urée est introduite à 20°C, le temps n'est pas un facteur important : il doit correspondre au temps de dissolution de l'urée. A cette même étape, on peut ajouter de l'eau de façon à obtenir un extrait sec de 45-55°C.

En fin de synthèse, la valeur du pH de la résine est généralement ajustée à 7,3-8,7 par addition de soude ou d'une solution aqueuse d'une amine tertiaire comme la triéthanolamine, la diméthyléthanolamine, la méthyldiéthanolamine, la triméthylamine, ... .

La présente invention porte également sur l'utilisation de la résine urée-formol obtenue par le procédé tel que défini ci-dessus comme résine aminoplaste thermodurcissable d'imprégnation.

Les Exemples suivants illustrent la présente invention sans toutefois en limiter la portée. Dans ces exemples, les pourcentages sont donnés en poids sauf indication contraire; la réactivité d'une résine est mesurée par le temps de gel au tube à la température de 80°C : 10 g de résine sont mis en présence de 1 ml de solution aqueuse de chlorure d'ammonium à 150 g/l ; son imprégnabilité est mesurée par son aptitude à traverser un carré de papier posé à sa surface : un colorant rouge (Rhodamine) est ajouté à la résine et l'on mesure le temps que cette dernière met à mouiller le papier.

### EXEMPLE 1 (comparatif) : Préparation des résines comparatives A1, A2 et A3

Dans un réacteur agité, surmonté d'un réfrigérant à reflux et muni d'un thermomètre et d'une sonde pH métrique, on introduit 1636,4 g de solution aqueuse de formol à 44% en poids (24 moles), à une température aux environs de 50°C. Après avoir ajusté la valeur du pH à 7 par addition de soude (solution aqueuse à 10% p/p), on ajoute 411,4 g d'urée (6,86 moles), puis on chauffe le milieu réactionnel à la température de 90°C. Le pH dans cette phase ne doit pas descendre en dessous de 5,9. Après 10 minutes à 90°C, on ajuste la valeur du pH à 4,2 par addition d'acide formique (solution aqueuse à 10% p/p), puis on chauffe le milieu réactionnel à 100°C. Après 30 minutes à cette température, on ajuste la valeur du pH à 6,5 par addition de soude après avoir refroidi le milieu réactionnel à 90°C. On ajoute alors 164,4 g d'urée (2,74 moles) et on laisse 10 minutes à cette température. Le pH du milieu réactionnel ne doit pas descendre en dessous de 5,9. On ajuste la valeur du pH à 4,6 et on chauffe le milieu réactionnel à la température de 98°C. L'évolution de la réaction de condensation est suivie par la mesure de la viscosité à 20°C.

L'évolution de la viscosité est décrite dans le Tableau suivant:

| Temps (min.) | 0 | 12 | 30 | 45 | 60 | 75 | 85 |
|---|---|---|---|---|---|---|---|
| Viscosité à 20°C (mPa.s) | 19 | 25 | 30 | 34 | 37 | 41 | 44 |

Dès que le test d'arrêt est atteint, 44 mPa.s à 20°C, on ajuste la valeur du pH à 6,9 par addition de soude, puis on refroidit le milieu réactionnel à 20°C.

A cette température, on partage le milieu réactionnel en trois parties et on ajoute à chacune d'elles une quantité d'urée et une quantité d'eau telles que l'on obtienne trois résines (A1, A2, A3) à trois niveaux de rapport molaire F/NH₂ et à un extrait sec de 50%. La valeur du pH est ajustée à 7,5 par addition de soude.

Les différentes étapes du procédé sont résumées dans le Tableau 1 ci-après ; dans le Tableau 2 ci-après, figurent les propriétés et l'analyse des résines A1, A2 et A3.

### EXEMPLE 2 (comparatif): Préparation de la résine comparative B

Le mode opératoire est identique en tous points à celui de l'Exemple comparatif 1, sauf que le degré de condensation est plus grand. L'évolution de la viscosité dans la phase de condensation est décrite dans le Tableau suivant:

| Temps (min.) | 10 | 60 | 120 | 180 | 210 | 240 | 270 | 300 | 330 |
|---|---|---|---|---|---|---|---|---|---|
| Viscosité (mPa.s) | 19 | 32 | 51 | 62 | 74 | 86 | 90 | 105 | 110 |

Les différentes étapes du procédé sont résumées dans le Tableau 1 ci-après ; dans le Tableau 2 ci-après, figurent les propriétés et l'analyse de la résine B.

### EXEMPLE 3 : Préparation des résines C1, C2 et C3

Dans un réacteur agité, surmonté d'un réfrigérant à reflux et muni d'un thermomètre et d'une sonde pH métrique, on introduit 1630 g d'une solution aqueuse de formol à 44% à une température aux environs de 50°C. Après avoir ajusté la valeur du pH à 7 par addition de soude (solution aqueuse à 10% p/p), on ajoute 411,43 g d'urée, puis on chauffe le milieu réactionnel à la température de 90°C. Le pH dans cette phase ne doit pas descendre en dessous de 5,9. Après 10 minutes à 90°C, on ajuste la valeur du pH à 4,2 par addition d'acide formique (solution aqueuse à 10% p/p), puis on chauffe le milieu réactionnel à 100°C.

Après 30 minutes à cette température, on ajuste la valeur du pH à 6,5 par addition de soude après avoir refroidi le milieu réactionnel à 90°C. On ajoute alors 164,4 g d'urée et on laisse 10 minutes à cette température. Le pH du milieu ne doit pas descendre en dessous de 5,9. On ajuste la valeur du pH à 4,6 et on chauffe le milieu réactionnel à la température de 98°C. L'évolution de la réaction est suivie par la mesure de la viscosité à 20°C. L'évolution de la viscosité est décrite dans le Tableau suivant:

| Temps (min.) | 15 | 35 | 75 | 125 | 165 | 185 | 210 | 225 |
|---|---|---|---|---|---|---|---|---|
| Viscosité (mPa.s) | 23 | 30 | 41 | 61 | 76 | 86 | 93 | 98 |

Dès que le test d'arrêt est atteint, 98 mPa.s à 20°C, on ajuste la valeur du pH à 6,9 par addition de soude et on refroidit le milieu réactionnel à la température de 60°C. On ajoute 590 g d'une solution aqueuse de formol à 44%, puis on maintient à la température de 60°C pendant 1 heure. Le pH dans cette phase est stable aux environs de 6,7. On refroidit le milieu réactionnel à la température de 20°C. A cette température, on partage le milieu réactionnel en trois parties, puis on ajoute à chacune d'elles une quantité d'urée et une quantité d'eau telles que l'on obtienne trois résines C1, C2, C3, à trois niveaux de rapport molaire F/NH₂ et à un extrait sec de 50%. Les valeurs de pH de chaque résine sont ajustées à 7,5 à l'aide de la solution de soude à 10%.

Les différentes étapes du procédé sont résumées dans le Tableau 1 ci-après ; dans le Tableau 2 ci-après, figurent les propriétés et l'analyse des résines C1, C2 et C3.

### EXEMPLE 4 : Préparation de la résine D

Dans un réacteur agité, surmonté d'un réfrigérant à reflux et muni d'un thermomètre et d'une sonde pH métrique, on introduit 465,2 g de formol à 44% à une température aux environs de 50°C. Après avoir ajusté la valeur du pH à 7 par addition de soude (solution aqueuse à 10% p/p), on ajoute 117 g d'urée, puis on chauffe le milieu réactionnel à la température de 90°C. Le pH dans cette phase ne doit pas descendre en dessous de 5,9. Après 10 minutes à 90°C, on ajuste la valeur du pH à 4,2 par addition d'acide formique (solution aqueuse à 10% p/p), puis on chauffe le milieu réactionnel à 100°C. Après 30 minutes à cette température, on ajuste la valeur du pH à 6,5 par addition de soude après avoir refroidi le milieu réactionnel à 90°C. On ajoute alors 46,8 g d'urée et on laisse 10 minutes à cette température. Le pH du milieu réactionnel ne doit pas descendre en dessous de 5,9. On ajuste la valeur du pH à 4,6 et on chauffe le milieu réactionnel à la température de 98°C. L'évolution de la réaction de condensation est suivie par la mesure de la viscosité à 20°C.

Dès que le test d'arrêt est atteint, 100 mPa.s à 20°C, on ajuste la valeur du pH à 6,9 et on refroidit le milieu réactionnel à 60°C. On ajoute 93 g d'une solution aqueuse de formol à 44%, puis on maintient à la température de 60°C pendant 1 heure. Le pH dans cette phase est stable aux environs de 6,7. On ajoute 163,5 g d'urée à la température de 60°C après avoir coupé le chauffage du réacteur. La réaction de mise en solution de l'urée étant endothermique, la température du milieu réactionnel chute aux environs de 40°C. On maintient la température du mélange réactionnel à 40°C pendant la phase d'addition et on prolonge le temps de réaction pour une durée globale de 45 minutes.

On refroidit le milieu réactionnel à la température de 20°C et on rajoute 90,7 g d'eau. Cette eau peut être utilisée pour accélérer le refroidissement de la résine. On vérifie que la valeur du pH en fin de synthèse est supérieure à 7,5, sinon on la rajuste par addition de soude (solution aqueuse à 10% p/p). Dans ce cas, on ne dépasse pas la valeur de 7,7.

Les différentes étapes du procédé sont résumées dans le Tableau 1 ci-après ; dans le Tableau 2 ci-après, figurent les propriétés et l'analyse de la résine D.

### EXEMPLE 5 : Préparation des résines E à K

On reproduit l'Exemple 4 excepté que la phase de condensation (a2) est réalisée à chaque fois à un pH différent de 4,2, étant ajusté non plus par de l'acide formique, mais par du sulfate d'ammonium, les temps de condensation pouvant également être modifiés. Ces paramètres apparaissent dans le Tableau 1, qui résume les différentes étapes du procédé.

De la même façon, à la phase de condensation (b2), le pH est modifié, de même que, le cas échéant, les valeurs des tests d'arrêt. Ces paramètres figurent également dans le Tableau 1.

Dans le Tableau 2 ci-après, figurent les propriétés et l'analyse des résines E à K.

### EXEMPLE 6 : Préparation des résines L1 à L5

Dans un réacteur agité, surmonté d'un réfrigérant à reflux et muni d'un thermomètre et d'une sonde pH métrique, on introduit 1634 g d'une solution aqueuse de formol à 44% à une température aux environs de 50°C. Après avoir ajusté la valeur du pH à 7 par addition de soude (solution aqueuse à 10% p/p), on ajoute 411,4 g d'urée, puis on chauffe le milieu réactionnel à la température de 90°C. Le pH dans cette phase ne doit pas descendre en dessous de 5,9. Après 10 minutes à 90°C, on ajuste la valeur du pH à 1,5 par addition de sulfamate d'ammonium, puis on chauffe le milieu réactionnel à 100°C. Après 30 minutes à cette température, on ajuste la valeur du pH à 6,5 par addition de soude après avoir refroidi le milieu réactionnel à 90°C. On ajoute alors 164,4 g d'urée et on laisse 10 minutes à cette température. Le pH du milieu réactionnel ne doit pas descendre en dessous de 5,9. On ajuste la valeur du pH à 3,8 par addition d'acide formique (solution aqueuse à 10% p/p), et on chauffe le milieu réactionnel à la température de 98°C. L'évolution de la réaction de condensation est suivie par la mesure de la viscosité à 20°C.

Dès que le test d'arrêt est atteint, 70 mPa.s à 20°C, on ajuste la valeur du pH à 6,9 par addition de soude et on refroidit le milieu réactionnel à la température de 60°C.

On ajoute 588 g d'une solution aqueuse de formol à 44%, puis on maintient la température de 60°C pendant 1 heure. Le pH dans cette phase est stable aux environs de 6,7. On refroidit le milieu réactionnel à la température de 20°C, puis on ajoute 729,6 g d'urée.

On partage le milieu réactionnel en 5 parties, puis on ajuste la valeur du pH comme décrit dans le Tableau 1 ci-après.

Les différentes étapes du procédé sont résumées dans le Tableau 1 ci-après ; dans le Tableau 2 ci-après, figurent les propriétés et l'analyse des résines L1 à L5.

### EXEMPLE 7 : Préparation de la résine M

Dans un réacteur agité, surmonté d'un réfrigérant à reflux et muni d'un thermomètre et d'une sonde pH métrique, on introduit 1639 g de formol à 44% à une température aux environs de 50°C. Après avoir ajusté la valeur du pH à 7 par addition de soude (solution aqueuse à 10% p/p), on ajoute 575,8 g d'urée, puis on chauffe le milieu réactionnel à la température de 90°C. Le pH dans cette phase ne doit pas descendre en dessous de 5,9. Après 10 minutes à 90°C, on ajuste la valeur du pH à 4,6 par addition d'acide formique (solution aqueuse à 10% p/p), puis on chauffe le milieu réactionnel à 98°C. L'évolution de la réaction est suivie par la mesure de la viscosité à 20°C. Dès que le test d'arrêt est atteint, 100 mPa.s à 20°C, on ajuste la valeur du pH à 6,9 par addition de soude et on refroidit le milieu réactionnel à la température de 60°C. On ajoute 300 g de solution aqueuse de formol à 44%, puis on maintient la température de 60°C pendant 1 heure. Le pH dans cette phase est stable aux environs de 6,7. On refroidit le milieu réactionnel à la température de 20°C. On ajoute 560 g d'urée et on ajuste la valeur du pH à 7,5 par addition de soude.

Les différentes étapes du procédé sont résumées dans le Tableau 1 ci-après ; dans le Tableau 2 ci-après, figurent les propriétés et l'analyse de la résine M.

### EXEMPLE 8 : Préparation des résines N, O1 et O2

Les modes opératoires de ces résines sont identiques à celui de la résine D sauf que dans le cas de la résine N le pH dans la première phase de condensation est de 6 et que dans le cas de la résine O, le pH dans la première phase de condensation est de 7.

Les différentes étapes du procédé sont résumées dans le Tableau 1 ci-après ; dans le Tableau 2 ci-après, figurent les propriétés et l'analyse des résines N, O1 et O2.

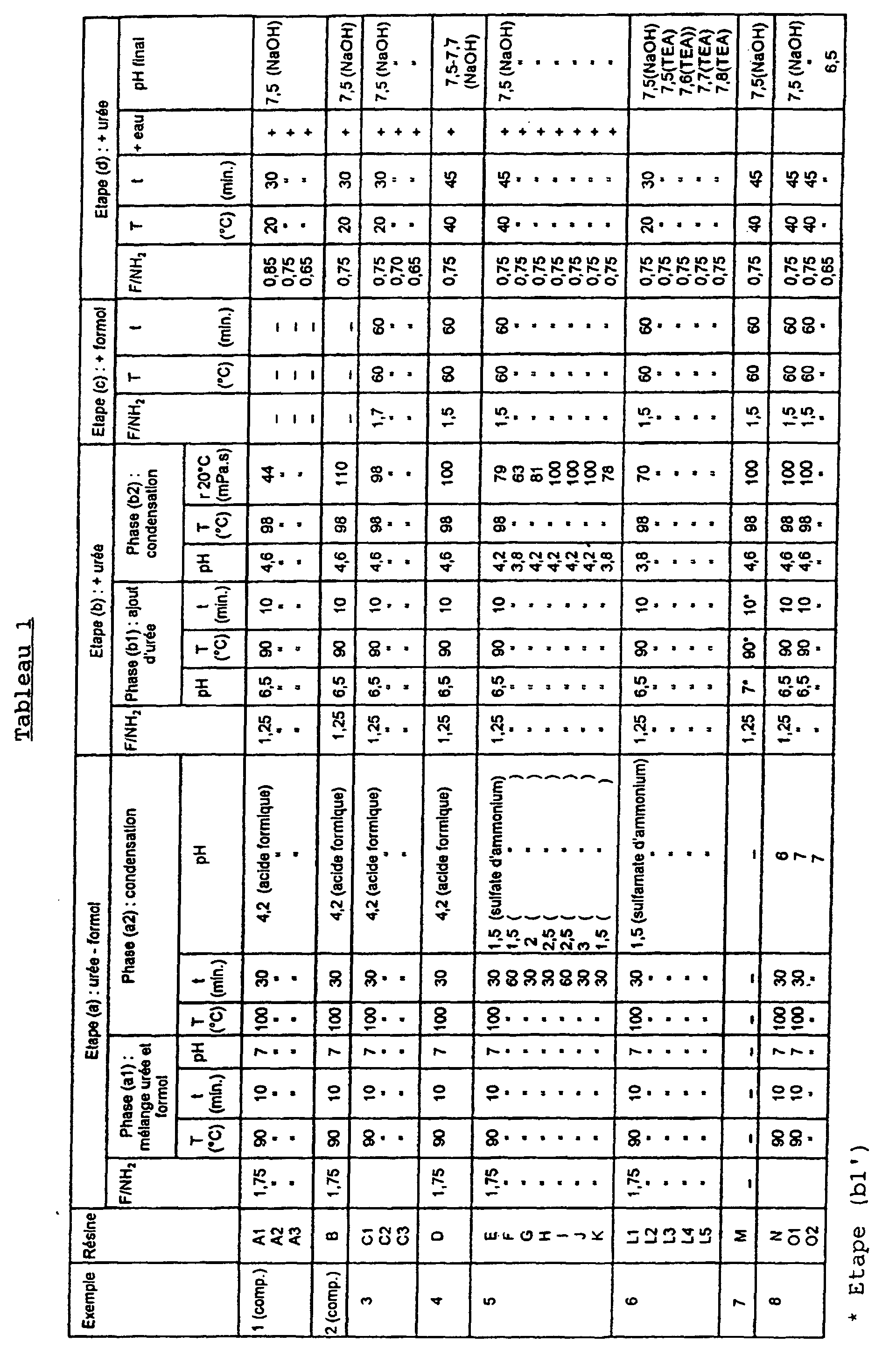

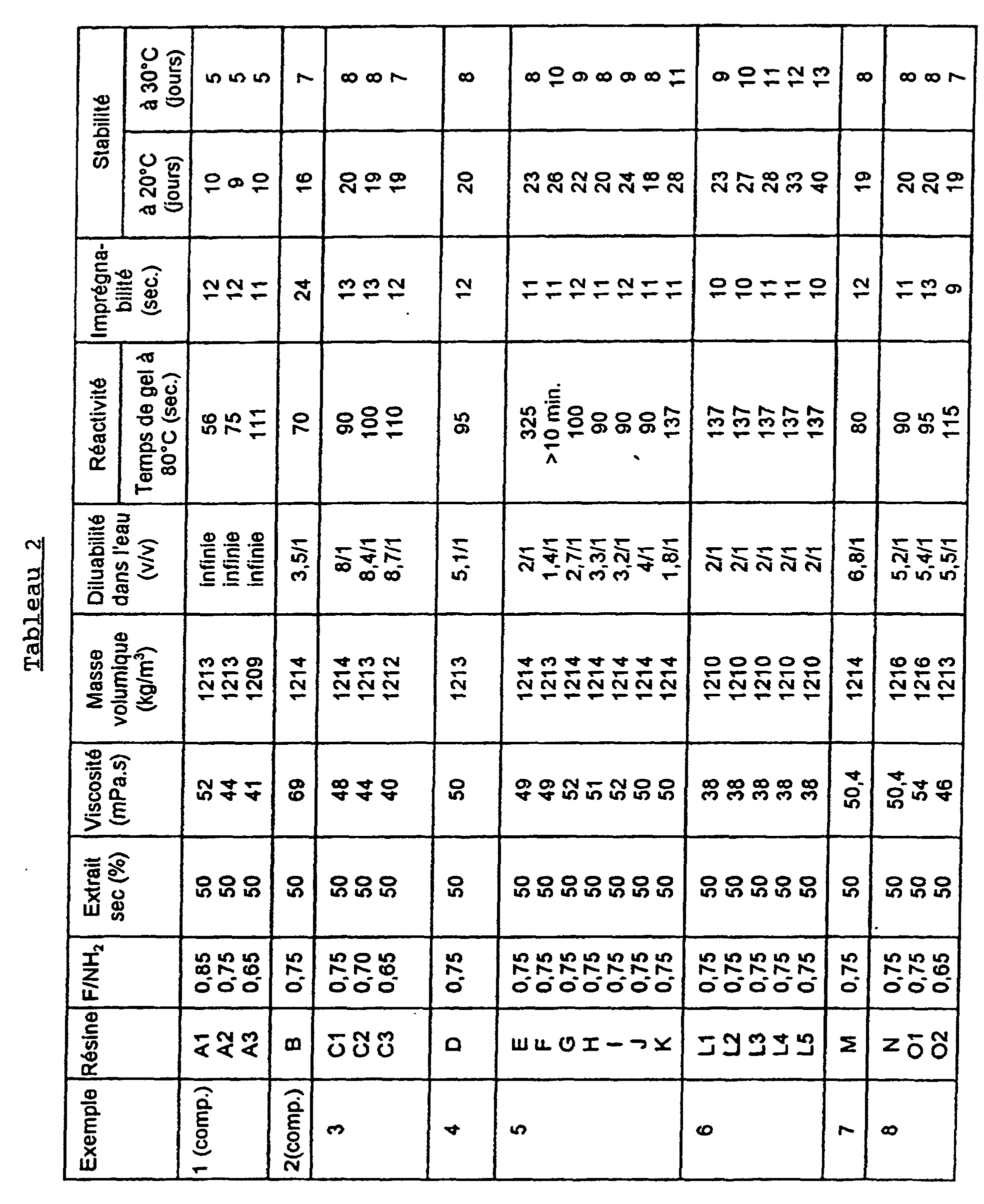

## Revendications

1. Procédé de fabrication de résines thermodurcissables urée-formol, **caractérisé par le fait qu'**il comprend les étapes consistant à:
(a) faire réagir de l'urée et du formol à un rapport molaire formol sur groupements NH₂ compris entre 1,5 et 2,5,
(a1) à une température comprise entre 90 et 100°C pendant une durée comprise entre 5 et 20 minutes et à un pH compris entre 5,9 et 7; puis
(a2) à une température comprise entre 80 et 100°C, pendant une durée comprise entre 30 et 60 minutes, et à un pH compris entre 1,5 et 7 ; puis
(b) ajouter de l'urée pour abaisser le rapport molaire formol sur groupements NH₂ à une valeur comprise entre 1,15 et 1,35,
(b1) ladite phase d'addition, réalisée à une température comprise entre 90 et 100°C, pendant une durée comprise entre 5 et 20 minutes, et à un pH compris entre 5,9 et 7, étant suivie par
(b2) une réaction de condensation, réalisée à une température comprise entre 80 et 100°C et à un pH compris entre 3,5 et 5, jusqu'à ce qu'un test d'arrêt soit atteint dont la valeur dépend de la concentration en matières actives du milieu et de la viscosité de la résine terminée, ladite viscosité devant être compatible avec une bonne imprégnabilité; et
(c) après refroidissement du milieu réactionnel, ajouter du formol afin de remonter le rapport molaire formol sur groupements NH₂ à une valeur comprise entre 1,4 et 1,9, à une température comprise entre 50 et 70°C, pendant une durée comprise entre 30 et 90 minutes; puis
(d) ajouter de l'urée afin d'obtenir un rapport molaire final formol sur groupements NH₂ correspondant à celui de la résine finie qui est compris entre 0,45 et 0,85, à une température comprise entre 20 et 60°C, pendant un laps de temps pouvant aller jusqu'à 90 minutes,
les étapes (a) et (b1) pouvant être remplacées par une étape (b1') consistant à faire réagir de l'urée et du formol au rapport molaire formol sur groupements NH₂ de l'étape (b1) et dans les conditions de température, de temps et de pH de l'étape (b1).

2. Procédé selon la revendication 1, **caractérisé par le fait que** l'on conduit la phase (a1) de l'étape (a) pendant environ 10 minutes, à une température de 90°C et à pH 7.

3. Procédé selon l'une des revendications 1 et 2, **caractérisé par le fait que** l'on conduit la phase (a2) de l'étape (a) à une température de 100°C et pendant 30 minutes.

4. Procédé selon l'une des revendications 1 à 3, **caractérisé par le fait, que** lors de la phase (a2), on ajuste la valeur du pH par un agent d'ajustement du pH dont la nature et la quantité sont choisies pour que son addition à la résine ne perturbe ni la réactivité ni la stabilité de celle-ci.

5. Procédé selon la revendication 4, **caractérisé par le fait que** l'agent d'ajustement du pH lors de la phase (a2) est choisi parmi les acides comme l'acide formique, et les sels d'amines et d'acides forts comme le sulfate d'ammonium et le sulfamate d'ammonium.

6. Procédé selon l'une des revendications 1 à 5, **caractérisé par le fait que** l'on conduit la phase (b1) de l'étape (b) pendant environ 10 minutes.

7. Procédé selon l'une des revendications 1 à 6, **caractérisé par le fait que** l'on conduit la phase (b2) de l'étape (b) à une température de l'ordre de 98°C.

8. Procédé selon l'une des revendications 1 à 7, **caractérisé par le fait que** l'on arrête la condensation de la phase (b2) de l'étape (b) lorsque la viscosité à 20°C de la résine est de 10-150 mPa.s.

9. Procédé selon l'une des revendications 1 à 8, **caractérisé par le fait qu'**à l'étape (d), on ajoute l'urée à une température de l'ordre de 20 à 60°C.

10. Procédé selon l'une des'revendications 1 à 9, **caractérisé par le fait qu'**à l'étape (d), on ajoute de l'eau de façon à obtenir un extrait sec de 45-65%.

11. Procédé selon l'une des revendications 1 à 10, **caractérisé par le fait qu'**on ajuste le pH de la résine finale à 7,3-8,7 par addition de soude ou d'une solution aqueuse d'une amine tertiaire.

12. Utilisation de la résine urée-formol obtenue par le procédé tel que défini à l'une des revendications 1 à 10 comme résine aminoplaste thermodurcissable d'imprégnation.

## Claims

1. Process for manufacturing thermosetting urea-formaldehyde resins, **characterized in that** it comprises the steps consisting in:
(a) making the urea and the formaldehyde react at a molar ratio of formaldehyde to NH₂ groups between 1.5 and 2.5,
(a1) at a temperature between 90 and 100°C for a time between 5 and 20 minutes and at a pH between 5.9 and 7 and then
(a2) at a temperature between 80 and 100°C, for a time between 30 and 60 minutes, and at a pH between 1.5 and 7; then
(b) adding urea in order to lower the molar ratio of formaldehyde to NH₂ groups to a value between 1.15 and 1.35,
(b1) the said addition phase, carried out at a temperature between 90 and 100°C for a time between 5 and 20 minutes and at a pH between 5.9 and 7, being followed by
(b2) a condensation reaction, carried out at a temperature between 80 and 100°C and at a pH between 3.5 and 5, until a stop test is reached, the value of which depends on the concentration of active substances in the mixture and on the viscosity of the completed resin, the said viscosity having to be compatible with good impregnability; and
(c) after the reaction mixture is cooled, adding formaldehyde so as to bring the molar ratio of formaldehyde to NH₂ groups to a value between 1.4 and 1.9, at a temperature between 50 and 70°C, for a time between 30 and 90 minutes; and then
(d) adding urea so as to obtain a final molar ratio of formaldehyde to NH₂ groups corresponding to that of the finished resin, which is between 0.45 and 0.85, at a temperature between 20 and 60°C, for a period of time possibly ranging up to 90 minutes,
it being possible for steps (a) and (b1) to be replaced with a step (b1') consisting in making the urea and the formaldehyde react at the molar ratio of formaldehyde to NH₂ groups of step (b1) and under the temperature, time and pH conditions of step (b1).

2. Process according to Claim 1, **characterized in that** phase (a1) of step (a) is carried out for approximately 10 minutes, at a temperature of 90°C and a pH of 7.

3. Process according to either of Claims 1 and 2, **characterized in that** phase (a2) of step (a) is carried out at a temperature of 100°C and for 30 minutes.

4. Process according to one of Claims 1 to 3, **characterized in that**, during phase (a2), the pH value is adjusted by a pH adjusting agent, the nature and the quantity of which are chosen so that its addition to the resin disturbs neither the reactivity nor the stability of the said resin.

5. Process according to Claim 4, **characterized in that** the agent for adjusting the pH during phase (a2) is chosen from acids, such as formic acid, and salts of amines and strong acids, such as ammonium sulphate and ammonium sulphamate.

6. Process according to one of Claims 1 to 5, **characterized in that** phase (b1) of step (b) is carried out for about 10 minutes.

7. Process according to one of Claims 1 to 6, **characterized in that** phase (b2) of step (b) is carried out at a temperature of around 98°C.

8. Process according to one of Claims 1 to 7, **characterized in that** the condensation of phase (b2) of step (b) is stopped when the viscosity of the resin at 20°C is 10-150 mPa.s.

9. Process according to one of Claims 1 to 8, **characterized in that** the urea is added in step (d) at a temperature of around 20 to 60°C:

10. Process according to one of Claims 1 to 9, **characterized in that** water is added at step (d) so as to obtain a solids content of 45-65%.

11. Process according to one of Claims 1 to 10, **characterized in that** the pH of the final resin is adjusted to 7.3-8.7 by adding sodium hydroxide or an aqueous solution of a tertiary amine.

12. Use of the urea-formaldehyde resin obtained by the process as defined in one of Claims 1 to 10 as a thermosetting aminoplast impregnating resin.

## Patentansprüche

1. Verfahren zur Herstellung von hitzehärtbaren Harnstoff-Formaldehyd-Harzen, **dadurch gekennzeichnet, daß** man
(a) Harnstoff und Formaldehyd in einem Molverhältnis von Formaldehyd zu NH₂-Gruppen zwischen 1,5 und 2,5
(a1) bei einer Temperatur zwischen 90 und 100°C über einen Zeitraum zwischen 5 und 20 Minuten und bei einem pH-Wert zwischen 5,9 und 7 und dann
(a2) bei einer Temperatur zwischen 80 und 100°C über einen Zeitraum zwischen 30 und 60 Minuten und bei einem pH-Wert zwischen 1,5 und 7
umsetzt; danach
(b) durch Zugabe von Harnstoff das Molverhältnis von Formaldehyd zu NH₂-Gruppen auf einen Wert zwischen 1,15 und 1,35 herabsetzt, wobei
(b1) im Anschluß an die bei einer Temperatur zwischen 90 und 100°C über einen Zeitraum zwischen 5 und 20 Minuten und bei einem pH-Wert zwischen 5,9 und 7 durchgeführte Zugabephase
(b2) bei einer Temperatur zwischen 80 und 100°C und bei einem pH-Wert zwischen 3,5 und 5 eine Kondensationsreaktion bis zum Erreichen eines Stopptestwerts, der von der Konzentration aktiver Substanzen im Medium und der Viskosität des terminierten Harzes abhängt, durchgeführt wird, wobei die Viskosität mit einer guten Imprägnierbarkeit vereinbar sein muß,
(c) nach Abkühlen des Reaktionsmediums durch Zugabe von Formaldehyd bei einer Temperatur zwischen 50 und 70°C über einen Zeitraum zwischen 30 und 90 Minuten das Molverhältnis von Formaldehyd zu NH₂-Gruppen auf einen Wert zwischen 1,4 und 1,9 erhöht und danach
(d) durch Zugabe von Harnstoff bei einer Temperatur zwischen 20 und 60°C über einen Zeitraum von bis zu 90 Minuten ein Endmolverhältnis von Formaldehyd zu NH₂-Gruppen, das demjenigen des fertigen Harzes entspricht und zwischen 0,45 und 0,85 liegt, einstellt.
wobei die Schritte (a) und (b1) durch einen Schritt (b1') ersetzt werden können, bei welchem man Harnstoff und Formaldehyd in dem Molverhältnis von Formaldehyd zu NH₂-Gruppen gemäß Schritt (b1) und unter den Temperatur-, Zeit- und pH-Bedinungungen von Schritt (b1) umsetzt.

2. Verfahren nach Anspruch 1, **dadurch gekennzeichnet, daß** man die Phase (a1) des Schritts (a) über einen Zeitraum von ungefähr 10 Minuten bei einer Temperatur von 90°C und einem pH-Wert von 7 durchführt.

3. Verfahren nach Anspruch 1 oder 2, **dadurch gekennzeichnet, daß** man die Phase (a2) des Schritts (a) bei einer Temperatur von 100°C und über einen Zeitraum von 30 Minuten durchführt.

4. Verfahren nach einem der Ansprüche 1 bis 3, **dadurch gekennzeichnet, daß** man in Phase (a2) den pH-Wert durch ein Mittel zur Einstellung des pH-Werts einstellt, dessen Beschaffenheit und Menge so gewählt werden, daß die Zugabe des Mittels zu dem Harz weder die Reaktivität noch die Stabilität des Harzes stört.

5. Verfahren nach Anspruch 4, **dadurch gekennzeichnet, daß** man in Phase (a2) das Mittel zur Einstellung des pH-Werts unter Säuren wie Ameisensäure und Salzen aus Aminen und starken Säuren wie Ammoniumsulfat und Ammoniumsulfamat auswählt.

6. Verfahren nach einem der Ansprüche 1 bis 5, **dadurch gekennzeichnet, daß** man die Phase (b1) des Schritts (b) über einen Zeitraum von ungefähr 10 Minuten durchführt.

7. Verfahren nach einem der Ansprüche 1 bis 6, **dadurch gekennzeichnet, daß** man die Phase (b2) des Schritts (b) bei einer Temperatur von etwa 98°C durchführt.

8. Verfahren nach einem der Ansprüche 1 bis 7, **dadurch gekennzeichnet, daß** man die Kondensation der Phase (b2) des Schritts (b) stoppt, wenn die Viskosität des Harzes bei 20°C sich auf 10-150 mPa.s beläuft.

9. Verfahren nach einem der Ansprüche 1 bis 8, **dadurch gekennzeichnet, daß** man in Schritt (d) den Harnstoff bei einer Temperatur von etwa 20 bis 60°C zugibt.

10. Verfahren nach einem der Ansprüche 1 bis 9, **dadurch gekennzeichnet, daß** man in Schritt (d) durch Zugabe von Wasser einen Feststoffgehalt von 45-65% einstellt.

11. Verfahren nach einem der Ansprüche 1 bis 10, **dadurch gekennzeichnet, daß** man den pH-Wert des fertigen Harzes durch Zugabe von Natriumhydroxid oder einer wäßrigen Lösung eines tertiären Amins auf 7,3-8,7 einstellt.

12. Verwendung des nach dem Verfahren nach einem der Ansprüche 1 bis 10 erhaltenen Harnstoff-Formaldehyd-Harzes als hitzehärtbares Aminoplast-Imprägnierharz.
